# EUROPÄISCHE PATENTANMELDUNG

(11) **EP 0 802 035 A1**
(43) Veröffentlichungstag der Anmeldung: **22.10.1997**
(21) Anmeldenummer: 97106042.1
(22) Anmeldetag: 12.04.1997
(51) Int. Cl.: B29C 49/42

(54) **Vorrichtung zum Herstellen von Hohlkörpern aus thermoplastischem Kunststoff mittels Extrusions-Blasformen**

(30) Priorität: 20.04.1996 DE 19615798
(71) Anmelder: KAUTEX WERKE REINOLD HAGEN AG, D-53229 Bonn (DE)
(72) Erfinder: Räder, Günter, 57612 Kettenhausen (DE)
(74) Vertreter: Koepsell, Helmut, Dipl.-Ing.

(57) **Zusammenfassung**

Die Erfindung betrifft eine Vorrichtung zum Herstellen von Hohlkörpern aus thermoplastischem Kunststoff mittels Extrusions-Blasformen mit wenigstens einem Extrusionskopf (22) und wenigstens einer damit im Produktionsprozeß zusammenwirkenden Blasform-Einheit (10), die eine geteilte Blasform (32) und ein die Blasformteile (32a,32b) tragendes Schließgestell (26) aufweist. Das Neue besteht darin, daß die Vorrichtung mit wenigstens einer weiteren Blasform-Einheit (12) versehen ist, die außerhalb des Arbeitsbereiches der wenigstens einen im Produktionsprozeß befindlichen Blasform-Einheit (10) angeordnet ist, ohne am Produktionsprozeß beteiligt zu sein, und bei einem Wechsel von einem Hohlkörperlos zu einem anderen Hohlkörperlos, zu dessen Herstellung eine andere Blasform benötigt wird, die beiden Blasform-Einheiten (10,12) gegeneinander ausgetauscht werden und die vorher in der Warteposition befindlich gewesene Blasform-Einheit (12) mit der Blasform versehen ist, die für die Herstellung des neuen Hohlkörperloses benötigt wird.

## Beschreibung

Die Erfindung betrifft eine Vorrichtung zum Herstellen von Hohlkörpern aus thermoplastischem Kunststoff mittels Extrusions-Blasformen gemäß dem Oberbegriff des Anspruches 1. Derartige Vorrichtungen werden zunehmend auch zum Herstellen großvolumiger Hohlkörper, beispielsweise Fässer und Kraftfahrzeugtanks verwendet. In vielen Fällen sind die Wandungen derartiger Hohlkörper mehrschichtig ausgebildet. Dazu ist es erforderlich, einen entsprechend mehrschichtigen Vorformling unter Anwendung der Coextrusion herzustellen.

Die Vorrichtungen zur Herstellung derartiger großvolumiger Hohlkörper sind insbesondere bei Anwendung der Coextrusion außerordentlich aufwendig. Zur Erzielung einer wirtschaftlichen Produktion ist es daher erforderlich, die Stillstandszeiten dieser Vorrichtungen so kurz wie möglich zu halten. Dem steht jedoch in vielen Fällen die Tatsache entgegen, daß die Losgrößen, also die Anzahl der herzustellennden Hohlkörper, die unter Verwendung derselben Blasform hergestellt werden können, klein sind. Dies hat zur Folge, daß die Blasformen in entsprechend kürzeren Abständen ausgewechselt werden müssen. Das dazu erforderliche Umrüsten der Vorrichtung - Ausbau der für das vorangegangene Los benutzten Blasform und Einbau der für das folgende Los benötigten Blasform - nimmt sehr viel Zeit in Anspruch, zumal in vielen Fällen nicht nur die Teile der eigentlichen Blasform, sondern auch Blasdorn und andere zusätzliche Elemente, beispielsweise zum Einführen von Einlegeteilen in die Form, ausgewechselt werden müssen. In ungünstigen Fällen wird für das Umrüsten mehr Zeit benötigt als für die Produktion des unter Verwendung der neuen Blasform herzustellenden Hohlkörperloses. Während des Umrüstens fällt die gesamte Vorrichtung für die Produktion aus, so daß entsprechend hohe Kosten entstehen.

Demzufolge liegt der Erfindung die Aufgabe zugrunde, eine Vorrichtung der einleitend beschriebenen Art so zu verbessern, daß auch dann, wenn sie für die Herstellung auch kleinerer Losgrößen benötigt wird, eine wirtschaftliche Produktion möglich ist.

Diese Aufgabe wird mit den Mitteln gelöst, die im Kennzeichen des Anspruches 1 angegeben sind.

Die Erfindung geht aus von der Überlegung, daß beim Übergang von einem Los zu einem anderen lediglich die Blasform(en) auszuwechseln sind, wohingegen das Extrusionssystem, das, insbesondere bei Anwendung der Coextrusion, außerordentlich aufwendig sein kann, lediglich eine neue Einstellung erfordert, die beispielsweise eine sich ändernde Länge des Vorformlings, insbesondere aber die normalerweise von Los zu Los sich ebenfalls ändernde Verteilung der Wanddicke des Vorformlings berücksichtigt. Diese Einstellung des Extrusionssystems, insbesondere des Extrusionskopfes, auf die Erfordernisse des folgenden Loses erfordert nicht sehr viel Zeit. Mithin reicht es zur Verringerung der Stillstandszeiten aus, eine zweite Blasform-Einheit in einer Warteposition in Reserve zu halten und beim Übergang von einem Los zum nächsten Los lediglich die Blasform-Einheiten auszutauschen. Dies erfordert bei entsprechender Ausgestaltung der Vorrichtung keinen großen Zeitaufwand, da es ohne weiteres möglich ist, die in der Warteposition befindliche Blasform-Einheit mit der für das nächste Los benötigten Blasform zu versehen, solange noch die Hohlkörper des vorangehenden Loses hergestellt werden. Es ist natürlich auch in Abhängigkeit von den jeweiligen Erfordernissen möglich, daß lediglich die eine Blasform-Einheit gegen die andere Blasform-Einheit ausgetauscht wird, ohne daß in der Warteposition ein Wechsel der Blasform durchgeführt worden wäre. Dies wird dann der Fall sein, wenn die Blasform der in der Warteposition befindlichen Blasformeinheit nach vorheriger Benutzung erneut benötigt wird, ohne daß in der Zwischenzeit ein drittes Hohlkörperlos hergestellt worden wäre.

Der Austausch der beiden Blasform-Einheiten gegeneinander nimmt, wie bereits gesagt, nicht sehr viel Zeit in Anspruch, da lediglich die die bisher im Produktionsprozeß befindliche Blasform-Einheit aus dem Arbeitsbereich entfernt und die bisher in der Warteposition gehaltene Blasform-Einheit in den Arbeitsbereich gebracht zu werden braucht. Selbstverständlich kann es auch erforderlich sein, die Leitungsanschlüsse zum Zuführen der für den Betrieb der Blasform-Einheit erforderlichen Energie und anderer Medien, beispielsweise Kühlwasser und Blasluft, von der ersten Blasform-Einheit zu lösen und mit der zweiten, in den Produktionsprozeß kommenden Blasform-Einheit zu verbinden. Dies kann jedoch bei entsprechender Ausgestaltung der Verbindungen, beispielsweise in Form von Schnellverschlüssen für die Schlauchleitungen, ohne großen Zeitaufwand erfolgen, so daß die Produktionsunterbrechung für den Austausch der beiden Blasform-Einheiten nicht mehr als beispielsweise 30 min. dauert.

Die Vorrichtung gemäß der Erfindung kann so ausgebildet sein, daß nur eine Blasform-Einheit sich im Produktionsprozeß befindet und demzufolge auch nur eine Blasform-Einheit in der Warteposition in Reserve gehalten wird. Es ist aber auch ohne weiteres möglich, die Erfindung bei einer Vorrichtung anzuwenden, bei welcher zwei Blasform-Einheiten, die wechselweise einen Vorformling aus demselben Extrusionssystem aufnehmen, vorgesehen sind, wobei dann auch zwei Blasform-Einheiten sich in einer Warteposition befinden und auf den nächsten Wechsel in der Produktion warten bzw. für diesen Wechsel durch Austausch der Blasformen vorbereitet werden. Wenn die beiden Blasform-Einheiten, die mit dem Extrusionskopf im Produktionsprozeß zuammenwirken, mit unterschiedlichen Blasformen zum Herstellen von unterschiedlichen Hohlkörpern versehen sind und die Vorformlinge für beide Blasform-Einheiten unter Anwendung unterschiedlicher Wanddickenprogramme extrudiert werden, kann die Anordnung so getroffen sein, daß in Abhängigkeit von den Bewegungen der beiden Blasform-Einheiten jeweils selbsttätig das Wanddickenprogramm wirksam gestellt wird, welches für die jeweils den folgenden Vorformling aufnehmende Blaform vorgesehen ist.

In der Zeichnung sind zwei Ausführungensbeispiele der Erfindung im Schema dargestellt. Es zeigen:
- Fig. 1: die Seitenansicht einer Extrusions-Blasformvorrichtung mit insgesamt zwei Blasform-Einheiten, von denen eine in den Produktionsprozeß eingeschaltet ist und die andere sich in der Warteposition befindet,
- Fig. 2: die dazugehörige Vorderansicht,
- Fig. 3: die dazugehörige Draufsicht, wobei jedoch der obere, das Extrusionssystem aufweisende Teil der Vorrichtung nicht dargestellt ist,
- Fig. 4: eine der Fig. 3 entsprechende Darstellung, wobei jedoch die am Produktionsprozeß teilnehmende Blasform-Einheit sich in der Aufnahmeposition befindet,
- Fig. 5: eine der Fig. 3 entsprechende Darstellung, jedoch mit der am Produktionsprozeß teilnehmenden Blasform-Einheit in der Entnahmeposition bei geschlossener Blasform,
- Fig. 6: eine der Fig. 3 entsprechende Darstellung, wobei jedoch beide Blasform-Einheiten sich in ihrer jeweiligen Warteposition befinden,
- Fig. 7: eine der Fig. 3 entsprechende Darstellung, bei welcher die andere Blasform-Einheit in den Produktionsprozeß eingeschaltet ist,
- Fig. 8: die Draufsicht, wiederum ohne Darstellung des oberen, das Extrusionssystem aufweisenden Teils der Vorrichtung, einer zweiten Ausführungsform mit insgesamt vier Blasform-Einheiten, von denen zwei in den Produktionsprozeß eingeschaltet sind und die beiden anderen sich in der jeweiligen Warteposition befinden,
- Fig. 9: eine der Fig. 8 entsprechende Ansicht, wobei jedoch die beiden in den Produktionsprozeß eingeschalteten Blasform-Einheiten andere Positionen einnehmen,
- Fig. 10: eine der Fig. 8 entsprechende Darstellung, in welcher die Blasform-Einheiten Positionen vor dem Austauschen jeweils zweier Blasform-Einheiten gegeneinander einnehmen,
- Fig. 11: eine der Fig. 8 entsprechende Darstellung mit den beiden anderen Blasform-Einheiten in Positionen, in welchen sie am Produktionsprozeß teilnehmen.

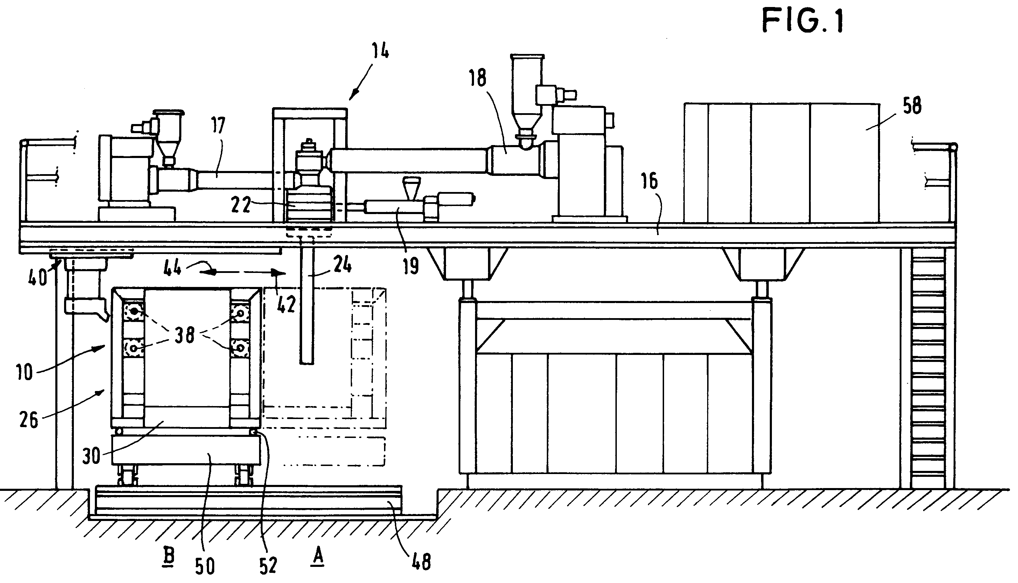

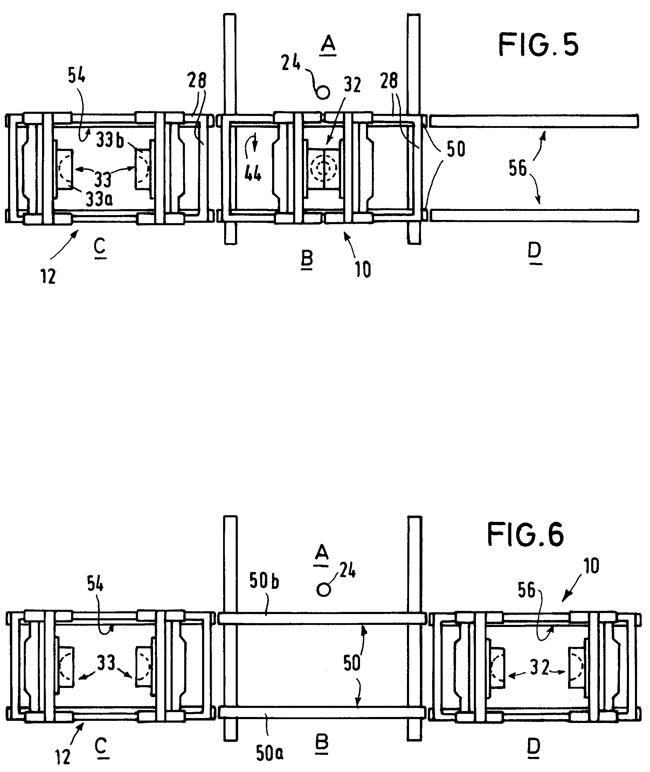

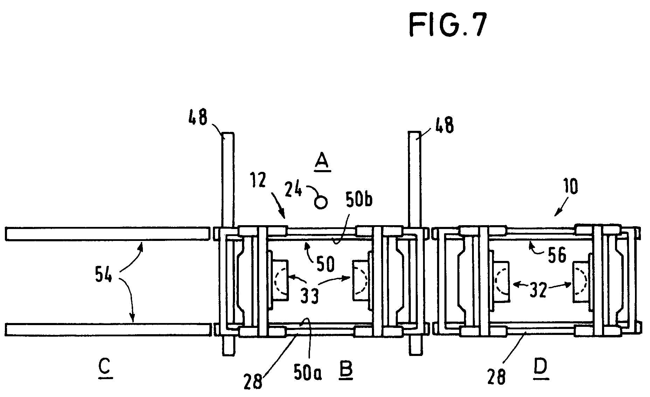

Die in den Figuren 1 bis 7 dargestellte Vorrichtung weist eine erste Blasform-Einheit 10 und eine zweite Blasform-Einheit 12 auf, von denen in der Anordnung gemäß den Figuren 1 bis 5 die Blasform-Einheit 10 im Zusammenwirken mit dem Extrusionssystem 14 am Produktionsprozeß teilnimmt, wohingegen sich die zweite Blasform-Einheit 12 in der Warteposition befindet. In der Anordnung gemäß den Figuren 6 und 7 nimmt die Blasform-Einheit 12 im Zusammenwirken mit dem Extrusionssystem 14 am Produktionsprozeß teil, wohingegen sich die Blasform-Einheit 10 in der Warteposition befindet.

Das Extrusionssystem 14 ist auf einer Bühne 16 angeordnet, die sich so weit oberhalb der oberen Begrenzung jeder der beiden Blasform-Einheiten 10 bzw. 12 befindet, daß letztere frei unterhalb der Bühne 16 bewegt werden können.

Das Extrusionssystem 14 weist bei diesem Ausführungsbeispiel insgesamt fünf Extruder 17, 18, 19, 20, 21 auf, die mit einem gemeinsamen Extrusionskopf 22 verbunden sind. Diese Extruder können unterschiedliche thermoplastische Materialien verarbeiten, die in den Extrusionskopf 22 gefördert und darin derart zusammengeführt werden, daß ein mehrschichtiger schlauchförmiger Vorformling 24 kontinuierlich aus der Austrittsöffnung des Extrusionskopfes 22 extrudiert wird. Einzelheiten dieser sogenannten Koextrusion sind jedem Fachmann geläufig.

Jede der beiden Blasform-Einheiten 10, 12 weist ein Schließgestell 26 auf, welches mit einem Grundrahmen 28 und zwei darauf in Längsrichtung des Grundrahmens hin- und herverschiebbaren Halterungen 30 versehen ist, an denen die Teile 32a, 32b bzw. 33a, 33b einer Blasform 32 bzw. 33 angebracht sind. Der Grundrahmen 28 ist oben an beiden Seiten mit linearen Führungen 31 versehen, mit denen in den Halterungen 30 befestigte Gleitschuhe oder dergl. 34 in Eingriff sind. Zum Zwecke des Schließens und Öffnens der Blasform 32 ist jedes Schließgestell mit wenigstens einer von einem Motor angetriebenen parallel zur Öffnungs- bzw. Schließrichtung verlaufenden Schraubenspindel 35 versehen, die durch jeweils einen Motor 36 angetrieben wird. An den Halterungen 30 sind entsprechende Spindelmuttern angebracht, die mit der Schraubenspindel 35 derart zusammenwirken, daß in der einen Drehrichtung der letzteren die beiden Halterungen 30 mit den von ihnen getragenen Formteilen 32a, 32b bzw. 33a, 33b in Schließrichtung und bei entgegengesetzter Rotationsbewegung in Öffnungsrichtung bewegt werden.

Die Halterungen 30 jedes Schließgestells 26 sind zudem mit Verriegelungseinrichtungen 38 versehen, die die beiden Blasformteile 32a, 32b bzw. 33a, 33b bei geschlossener Blasform gegeneinander verriegeln und die Kräfte aufnehmen, die beim Aufweiten des Vorformlings durch den Blasdruck auf die beiden Formteile und die sie tragenden Halterungen 30 ausgeübt werden. Auch hier handelt es sich um Einrichtungen und Maßnahmen, die jedem Fachmann geläufig sind. Sie stehen zudem mit der Erfindung in keinem unmittelbaren Zusammenhang.

Letzteres gilt auch für die als Blasdorn 39 ausgebildete Einrichtung zum Zuführen der Blasluft in den in der Blasform befindlichen Vorformling 24 hinein. Auch hier können andere Mittel und Möglichkeiten verwendet werden. Die jeweils im Produktionsprozeß befindliche Blasform-Einheit ist zwischen einer Aufnahmeposition A, in welcher der Vorformling 24 von der Blasform aufgenommen wird, und einer Entnahmeposition B, in welcher der aufgeweitete Hohlkörper aus der Blasform entnommen wird, in Richtung der Pfeile 42, 44 hin- und herbewegbar. Der Produktionszyklus, an dem bei den in den Figuren 1 bis 5 dargestellten Anordnungen die Blasform-Einheit 10 teilnimmt, läuft in der Weise ab, daß der Vorformling 24 aus dem Extrusionskopf 22, der bei dem in der Zeichnung dargestellten Ausführungsbeispiel der Aufnahmestation A zugeordnet ist, in den unterhalb des letzteren befindlichen Raum hineinextrudiert wird, wobei sich die Blasform-Einheit 10 zunächst in der Entnahmeposition B befindet, wie dies in den Figuren 1 und 5 dargestellt ist. Dabei ist die Blasform zunächst geschlossen, um den in ihr befindlichen Hohlkörper, der aus dem unmittelbar vorher extrudierten Vorformling 24 durch inneren Überdruck hergestellt worden war, so weit abzukühlen, daß er sich selbst zu tragen in der Lage ist. Sobald dies der Fall ist, kann die Blasform der Blasform-Einheit 10 durch entsprechendes über die Schraubenspindel 35 bewirktes Verschieben der beiden Halterungen 30 geöffnet werden, so daß der Hohlkörper in der Entnahmestation B aus der Blasform herausgenommen werden kann. Dies geschieht allgemein über eine Entnahmeeinrichtung, die bei 40 in Fig. 1 der Zeichnung angedeutet ist.

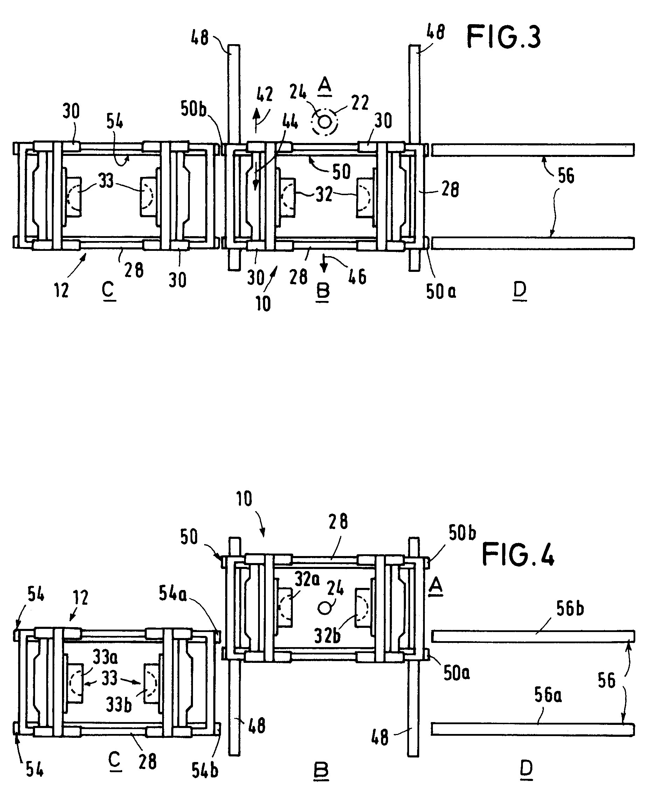

Alsdann wird die Blasform-Einheit 10 mit geöffneter Blasform 32 in Richtung des Pfeiles 42 in die Aufnahmeposition A verschoben, wobei der Produktionszyklus der Blasform-Einheit 10 einerseits und der des Extrusionssystems 14 andererseits so aufeinander abgestimmt sind, daß etwa zu dem Zeitpunkt, in welchem die Blasform-Einheit in der Aufnahmestation A eintrifft, oder kurz danach der Vorformling 24 die für die Herstellung eines Hohlkörpers erforderliche Länge aufweist. Danach wird die Blasform 32 der Blasform-Einheit 10 um den am Extrusionskopf 22 hängenden Vorformling 24 geschlossen, worauf die Blasform-Einheit in Richtung des Pfeiles 44 in die Entnahmestation B bewegt wird, wie dies Fig. 5 zeigt. Nach auseichender Abkühlung des mittlerweile durch Aufweiten des Vorformlings in der Blasform 32 hergestellten Hohlkörpers wird die Blasform geöffnet, so daß der Hohlkörper in Richtung des Pfeiles 46 entnommen werden kann. Fig. 3 zeigt die offene Blasform 32 der Blasform-Einheit 10 nach Entnahme des Hohlkörpers. Die Blasform-Einheit kann nunmehr zur Aufnahme des folgenden Vorformlings 24 wieder in die Aufnahmestation A zurückbewegt werden, wobei im Bedarfsfall vor Beginn dieser Bewegung noch sogenannte Einlegeteile, die beim Aufweiten des Vorformlings im folgenden Produktionszyklus mit dem Hohlkörper verbunden werden sollen, in die Blasform eingelegt werden können.

Für die Hin- und Herbewegungen der jeweils im Produktionsprozeß befindlichen Blasform-Einheit zwischen Aufnahmestation A und Entformstation B ist eine im Boden eingelassene lineare Führung 48 vorgesehen, die aus zwei oder mehr parallel zueinander angeordneten Schienen besteht. Auf dieser Führung 48 ist ein Wagen 50 hin- und herbewegbar angeordnet, der zwei Schienen 50a, 50b aufweist, die senkrecht zu den Schienen der Führung 48 verlaufen. Auf den beiden Schienen 50a, 50b des Wagens 50 ist die Blasform-Einheit angeordnet. Der Grundrahmen 28 jedes der Schließgestelle ist unterseitig mit Rollen 52 oder anderen Einrichtungen versehen, die es ermöglichen, die Blasform-Einheit auf den Schienen 50a, 50b in Längsrichtung der letzteren zu verschieben. Dabei sind in der Zeichnung nicht dargestellte lösbare Verriegelungseinrichtungen vorhanden, mittels welcher die auf dem Wagen 50 befindliche Blasform-Einheit lösbar mit dem Wagen verbunden wird, so daß sich die Blasform-Einheit in ihrer Gesamtheit gegenüber dem Wagen 50 nicht bewegen kann.

Die Antriebsmittel, die erforderlich sind, um den Wagen 50 mit der darauf befindlichen Blasform-Einheit zwischen Aufnahmestation A und Entnahmestation B hin- und herzuschieben, sind aus Gründen der Übersichtlichkeit in der Zeichnung nicht dargestellt. Es kann sich dabei z. B. um eine Zylinder-Kolben-Einheit handeln.

Der Wagen 50 kann als ein die Schienen 50a, 50b aufweisender Gleisabschnitt aufgefaßt werden, der zwischen den beiden Positionen A und B hin- und herbewegt wird. An jeder Seite der Entnahmestation B ist ein stationärer Gleisabschnitt 54 bzw. 56 angeordnet, der aus den Schienen 54a, 54b bzw. 56a, 56b besteht. Dabei ist die Anordnung so getroffen, daß bei in der Entnahmestation B befindlichem Wagen 50 die drei Gleisabschnitte 54, 50 und 56 einen durchgehend befahrbaren Gleisstrang derart bilden, daß eine auf dem Wagen 50 befindliche Blasform-Einheit auf einen der beiden seitlich neben der Entnahmestation B befindlichen Gleisabschnitte gefahren bzw. eine Blasform-Einheit von einem dieser Gleisabschnitte 54 bzw. 56 auf den Gleisabschnitt des Wagens 50 gefahren werden kann. Die Abstände zwischen den jeweils benachbarten Gleisabschnitten können sehr klein sein, da lediglich die Verschiebbarkeit der drei Gleisabschnitte relativ zueinander gewährleistet sein muß.

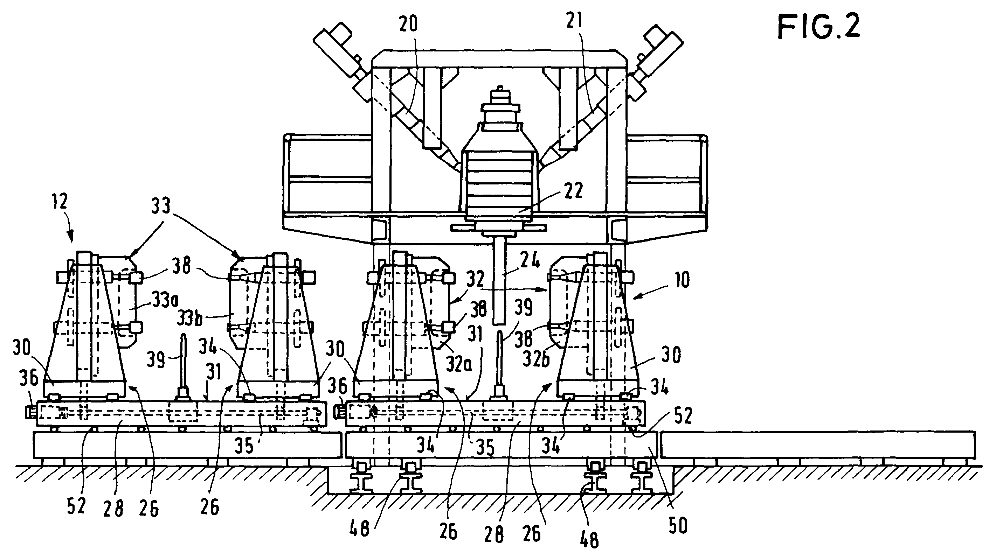

Bei der in den Fig. 1 bis 5 dargestellten Anordnung befindet sich die Blasform-Einheit 12 in der Warteposition C, die - bezogen auf die Darstellung in den Fig. 2 und 3 - sich links neben der Entnahmestation B außerhalb des Arbeitsbereiches der Blasform-Einheit 10 befindet. Die Blasform-Einheit 12 kann in der Warteposition C geparkt werden bis zu dem Zeitpunkt, zu welchem wieder Hohlkörper zu fertigen sind, zu deren Herstellung die Blasform 33 benötigt wird, die im Schließgestell der Blasform-Einheit 12 angebracht ist. Es ist aber auch möglich, in der Warteposition C die Blasform-Einheit 12 mit einer anderen Blasform auszurüsten, also die Blasformteile 33a, 33b gegen die Teile einer anderen Blasform auszutauschen, die für die Produktion des nächsten Hohlkörperloses benötigt wird.

Wenn die beiden Blasform-Einheiten 10 und 12 gegeneinander ausgetauscht werden sollen, ist es zunächst erforderlich, bei der in der Entnahmeposition B befindlicher Blasform-Einheit 10 die Verriegelung zu lösen, mit welcher die Blasform-Einheit 10 auf den Wagen 50 gesichert ist. Alsdann wird die Blasform-Einheit 10 aus der Entnahmeposition B in die rechts neben derselben befindlichen Warteposition D verschoben, wie dies in Fig. 6 dargestellt ist. Da die Schienen 50a, 50b des in der Entnahmeposition befindlichen Wagens 50 mit den Schienen 56a, 56b fluchten, kann dies ohne großen Zeitaufwand durchgeführt werden, wobei gleichzeitig oder danach die Blasform-Einheit 10 aus der Warteposition C auf die Schienenabschnitte 50a, 50b des Wagens 50 gefahren und dort verriegelt werden kann. Es ergibt sich dann die Anordnung gemäß Fig. 7, bei welcher die Warteposition C für die Blasform-Einheit 10 frei ist.

Der Austausch der Blasform-Einheit 12 gegen die Blasform-Einheit 10 erfolgt in entsprechender Weise, wobei selbstverständlich in beiden Fällen vor dem Verschieben der jeweiligen Blasform-Einheit aus der Entnahmeposition B in die jeweilige Warteposition C bzw. D die Zuleitungen für Luft und Kühlwasser und ggf. andere für den Betrieb erforderliche Medien und die Energieversorgung gelöst werden müssen.

Es ist natürlich auch möglich, der Warteposition C bzw. D Anschlüsse für die Betriebsmedien und die Energieversorgung zuzuordnen, um beispielsweise nach Einbau einer neuen Blasform in der Warteposition Probeläufe durchführen zu können, bevor die jeweilige Blasform-Einheit auf den Wagen 50 verschoben wird.

Es ist üblich und bekannt, die Wanddickenverteilung am Vorformling in Längsrichtung und/oder in Umfangsrichtung desselben in Abhängigkeit von einem Wanddickenprogramm zu steuern. Auf diese Weise soll der Materialverteilung an dem aus dem Vorformling herzustellenden Hohlkörpers Rechnung getragen werden, beispielsweise mit der Zielsetzung, den Hohlkörper zumindest in bestimmten Bereichen desselben mit einer gleichmäßigen Wanddicke zu versehen. Die Beeinflussung der Wandstärke des Vorformlings erfolgt über entsprechende Einstellung der Breite der ringförmigen Austrittsöffnung des Extrusionskopfes 22. Die dazu notwendige Programmier- und Einstelleinrichtungen können beispielsweise im Schaltschrank 58 untergebracht sein. Sie sind über geeignete Leitungen mit einer dem Extrusionskopf 22 zugeordneten Einstelleinrichtung zum Verändern der Spaltbreite der Austrittsöffnung des Extrusionskopfes 22 versehen. Diese Einrichtungen und Maßnahmen sind allgemein bekannt. Dazu wird auf DE-3816273 sowie EP-0345474 verwiesen.

Das Besondere bei der Vorrichtung gemäß der Erfindung besteht darin, daß zwei Wanddickenprogramme vorgesehen sind, von denen jeweils eines einer der beiden Blasform-Einheiten 10, 12 bzw. den von diesen getragenen Blasformen 32 bzw. 33 zugeordnet ist. Dabei sind die beiden Blasform-Einheiten direkt mit dem Wanddickenprogrammierer verbunden derart, daß bei einem Wechsel beispielsweise von der Blasform-Einheit 10 auf die Blasform-Einheit 12 selbsttätig auch eine entsprechende Umschaltung erfolgt derart, daß das der Blasform-Einheit 10 zugeordnete Programm unwirksam und das der Blasform-Einheit 12 zugeordnete Programm wirksam gestellt wird. Ein Wechsel der Blasform in einer der beiden Blasform-Einheiten hätte natürlich zur Folge, daß dann auch das jeweils zugeordnete Programm geändert werden oder ein weiteres Programm vorgesehen sein müßte, falls die neue Blasform eine andere Wanddickenverteilung erfordert. Auch dies könnte jedoch während des Betriebs der Vorrichtung unter Einsatz der jeweils anderen Blasform-Einheit geschehen.

Die Umschaltung des Wanddickenprogramms bei Wechsel von einem Blasform-Gestell zum anderen erfolgt ohnehin automatisch und daher so schnell, daß nach der Verriegelung der Blasformeinheit 12 auf den Schienen 50a, 50b die Produktion mit der nunmehr auf dem Wagen 50 befindlichen Blasformeinheit 12 aufgenommen werden kann. Es ist im übrigen zweckmäßig, daß die Blasform-Einheiten auch in der Warteposition an die Versorgungsleitungen beispielsweise für Druckluft und Kühlwasser angeschlossen bleiben, um beim Umrüsten von einer Blasform auf die andere oder bei Reperaturarbeiten die jeweils in der Warteposition befindliche Blasform-Einheit unter betriebsmäßigen Umständen testen zu können.

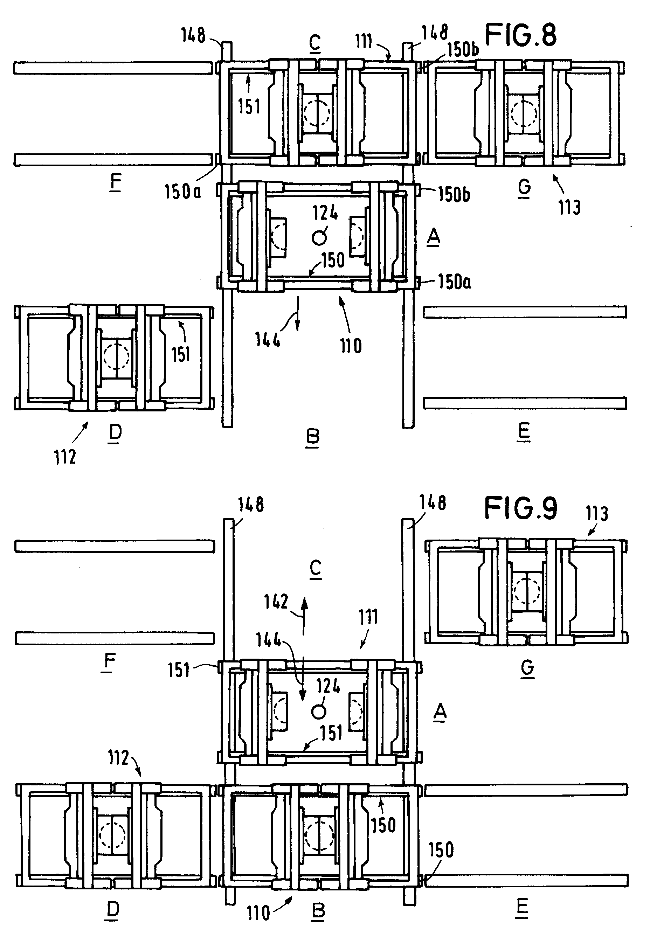

Bei dem in den Figuren 8 bis 11 dargestellten Ausführungsbeispiel ist die Anordnung so getroffen, daß jeweils zwei Blasform-Einheiten am Produktionsprozeß teilnehmen und zwei Blasform-Einheiten in einer Wartepositon angeordnet sein können. Die grundsätzliche Anordnung und auch die Art des Zusammenwirkens der Blasform-Einheiten mit dem gemeinsamen Extrusionskopf stimmen mit der des Ausführungsbeispiels gemäß den Figuren 1 bis 7 überein, so daß im zweiten Ausführungsbeispiel jene Teile und Einrichtungen, die denen des ersten Ausführungsbeispiels entsprechen, mit gleichen, jedoch um 100 höheren Bezugszeichen versehen sind.

Der obere Teil der Vorrichtung mit der das Extrusionssystem und den gemeinsamen Extrusionskopf tragenden Bühne kann in der in den Figuren 1 und 2 dargestellten Weise ausgebildet sein, so daß in soweit auf die Ausführung im Zusammenhang mit den Figuren 1 bis 7 verwiesen werden kann.

Den beiden am Produktionsprozeß teilnehmenden Blasform-Einheiten 110, 111 ist eine gemeinsame Aufnahmestation A zugeordnet, in welcher der Vorformling 124 von der jeweiligen Blasform aufgenommen wird. Dabei sind jedoch zwei Entnahmestationen B und C vorhanden, von denen sich, bezogen auf die Darstellung der Figur 1, die eine rechts und die andere links vom Extrusionskopf befindet.

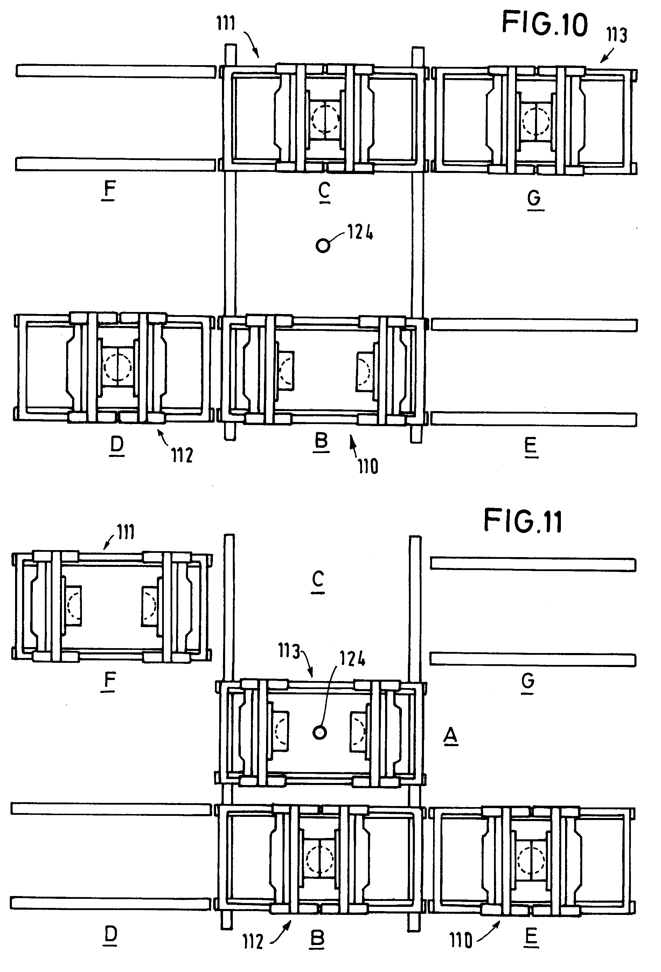

Bei der in Figur 8 der Zeichnung dargestellten Betriebsphase ist die Blasform-Einheit 110 in der Aufnahmestation A unmittelbar vor dem Schließen der Blasform um den Vorformling 124. Sobald die Blasform um den Vorformling geschlossen ist, wird sie in Richtung des Pfeiles 144 in die Entnahmeposition B bewegt, in welcher die Blasform-Einheit bleibt, bis die Blasform geöffnet und der darin hergestellte Hohlkörper entnommen worden ist. Figur 9 zeigt die Position der Blasform-Einheit 110 mit noch geschlossener Blasform in der Entnahmeposition B.

Die in der Entnahmeposition c befindliche Blasform-Einheit 111 wird, nachdem sie geöffnet und der in ihr hergestellte Hohlkörper entnommen worden ist, in Richtung des Pfeiles 144 in die Aufnahmestation A verschoben, um dort den folgenden Vorformling aufzunehmen. Fig. 9 zeigt die Blasform-Einheit 111 mit noch geöffneter Blasform in der Aufnahmestation A. Danach wird die Blasform-Einheit 111 in Richtung des Pfeiles 142 wieder in die ihr zugeordnete Entnahmestation C zurückbewegt, so daß wiederum die Blasform-Einheit 110 zur Aufnahme des nächsten Vorformlings in die Aufnahmestation A verschoben werden kann, nachdem sie zuvor geöffnet und der in ihr hergestellte Hohlkörper entnommen worden war. Mithin bewegt sich jede der beiden Blasform-Einheiten 110, 111 ebenfalls in der im Zusammenhang mit dem Ausführungsbeispiel gemäß den Figuren 1 bis 7 beschriebenen Weise. Allerdings müßte der Vorformling 124 mit gegenüber dem ersten Ausführungsbeispiel doppelter Geschwindigkeit extrudiert werden, wenn unterstellt wird, daß die Verweilzeit der beiden Blasform-Einheiten 110, 111 in der jeweiligen Entnahmepositon B bzw. C etwa der Verweildauer der einen im Produktionsprozeß befindlichen Blasform-Einheit 10 bzw. 12 des ersten Ausführungsbeispiel entspricht.

Da beim zweiten Ausführungsbeispiel für jede der am Produktionsprozeß teilnehmenden Blasform-Einheiten eine Entnahmestation B bzw. C vorhanden ist, ist die Führung 148 für den jeweiligen Wagen 150 bzw. 151 entsprechend länger ausgebildet als beim ersten Ausführungsbeispiel. Da beide jeweils am Produktionsprozeß teilnehmenden Blasform-Einheiten im Bedarfsfall gegen eine andere Blasform-Einheit ausgetauscht werden können, sind jeder der beiden Entnahmepositionen B bzw. C zwei Wartepositionen D und E bzw. F und G zugeordnet. Bei der Anordnung gemäß den Figuren 8 und 9 befindet sich die mit der Blasform-Einheit 110 austauschbare zweite Blasform-Einheit 112 in der Warteposition D, also bezogen auf die zeichnerische Darstellung der zweiten Ausführungsform links von der zugehörigen Entnahmeposition B, wohingegen sich die mit der zwischen den Positionen A und C hin- und herbewegbaren Blasform-Einheit 111 austauschbare zweite Blasform-Einheit 113 in der Warteposition G, also rechts von der zugehörigen Entnahemposition C befindet.

Figur 10 zeigt beide Blasform-Einheiten 110, 111 in der jeweiligen Entnahmeposition B bzw. C, so daß ein Austausch mit beiden in der Wartepositon D bzw. G befindlichen Blasform-Einheiten 112 bzw. 113 erfolgen kann. Figur 11 zeigt die Anordnung der Blasform-Einheit nach Durchführung des Austausches. Nunmehr nehmen die Blasform-Einheiten 112 und 113 am Produktionsprozeß teil.

Im Ergebnis stellt somit die Ausführungsform gemäß den Figuren 8 bis 11, abgesehen natürlich von der Aufnahmestation A und auch dem Extrusionssystem, eine Verdoppelung der ersten Ausführungsform gemäß den Figuren 1 bis 7 dar.

Allerdings ergeben sich bei der zweiten Ausführungsform zusätzliche Varianten bezüglich der Durchführung des Produktionsprozesses. Dies gilt insbesondere dann, wenn die beiden jeweils im Produktionsprozeß befindlichen Blasform-Einheiten mit unterschiedlichen Blasformen versehen sind und demzufolge zur Herstellung unterschiedlicher Hohlkörper dienen.

Dies ist jedenfalls dann möglich, wenn die Unterschiede zwischen den Hohlkörpern nicht allzu groß sind, insbesondere bezüglich der jeweils erforderlichen Schlauchlänge kein ins Gewicht fallender Unterschied besteht. Hierbei bestünde auch die Möglichkeit, für die Blasform jeder der beiden im Produktionsprozeß befindlichen Blasform-Einheiten ein eigenes Wanddickenprogramm vorzusehen, wobei in Abhängigkeit davon, welche Blasform den jeweils extrudierten Vorformling aufnimmt, die beiden Programme wechselweise eingeschaltet und abgeschaltet werden können.

Es besteht natürlich auch die Möglichkeit, nur eine der beiden im Produktionsprozeß befindlichen Blasform-Einheiten auszutauschen.

Ob die Blasformen der jeweils gegeneinander auszutauschenden Blasform-Einheiten beim Austauschen offen oder geschlossen sind, ist ohne wesentliche Bedeutung.

Beide in der Zeichnung dargestellten Ausführungsformen weisen den Vorteil auf, daß sie ein schnelles Umschalten von einem oder gegebenenfalls auch zwei Fertigungslosen auf ein anderes oder gegebenenfalls auch zwei andere Fertigungslos(e) ermöglichen, so daß lange Stillstandszeiten vermieden werden. Der dadurch erzielbare Kostenvorteil ist so groß, daß der zusätzliche Aufwand für die Schließgestelle der jeweils in der Warteposition befindlichen Blasform-Einheiten mehr als kompensiert wird, zumal ein zusätzlicher Vorteil noch darin besteht, daß die Vermeidung langer Stillstandszeiten eine größere Flexibilität hinsichtlich des Wechsels von einem Fertigungslos zum anderen zur Folge hat, so daß auch auf unvorhersehbare Anforderungen oder Änderungen sehr schnell reagiert werden kann.

Wenn vorstehend von einem Extrusionskopf und jeweils einer Blasform die Rede ist, soll dies nicht die Möglichkeit ausschließen, daß auch gleichzeitig mehrere Vorformlinge aus mehreren Extrusionsköpfen oder, je nach Definition, mehreren Austrittsöffnungen eines Extrusionskopfes extrudiert werden, wobei dann die Blasform eine der Anzahl der Vorformlinge entsprechende Anzahle von Formnestern aufweist und alle gleichzeitig extrudierten Vorformlinge beim Schließen der Blasform von dieser aufgenommen werden.

## Patentansprüche

1. Vorrichtung zum Herstellen von Hohlkörpern aus thermoplastischem Kunststoff mittels Extrusions-Blasformen mit einem Extrusionssystem (14) mit wenigstens einem Extrusionskopf (22) und wenigstens einer damit im Produktionsprozeß zusammenwirkenden ersten Blasform-Einheit (10), die eine geteilte Blasform (32) und ein die Blasformteile (32a, 32b) tragendes Schließgestell (26) aufweist, welches mit Antriebsmitteln (36) zum öffnen und Schließen der Blasform (32) versehen ist, wobei die Blasformteile (32a, 32b) zwischen einem offenen Zustand, in welchem sie einen Abstand voneinander aufweisen, und einem geschlossenen Zustand, in welchem sie aneinander anliegen und wenigstens ein Formnest begrenzen, bewegbar sind, und in einem Arbeitszyklus ein aus dem wenigstens einen Extrusionskopf (32) extrudierter Vorformling (24) von der Blasform (32) aufgenommen und darin durch inneren Überdruck aufgeweitet und nach ausreichender Abkühlung aus der Blasform entnommen wird, dadurch gekennzeichnet, daß zusätzlich zu der wenigstens einen ersten mit dem Extrusionskopf (22) im Produktionsprozeß zusammenwirkenden Blasform-Einheit (10) wenigstens eine zweite Blasform-Einheit (12) vorgesehen ist, die außerhalb des Arbeitsbereiches der wenigstens einen ersten Blasform-Einheit (10) in Warteposition (D) angeordnet ist, ohne am Produktionsprozeß teilzunehmen, und zur Aufnahme einer Blasform (33) zur Herstellung eines Hohlkörpers vorgesehen ist, der sich von dem Hohlkörper unterscheidet, der in der Blasform (32) der im Produktionsprozeß befindlichen ersten Blasform-Einheit (10) hergestellt wird, und erste und zweite Blasform-Einheit (10, 12) gegeneinander austauschbar sind.

2. Vorrichtung nach Anspruch 1, dadurch gekennzeichnet, daß die wenigstens eine erste Blasform-Einheit (10), die zum Herstellen von Hohlkörpern mit dem Extrusionskopf (22) im Produktionsprozeß zusammenwirkt, zwischen einer Aufnahmeposition (A), in welcher die geöffnete Blasform (32) den Vorformling (24) aufnimmt, und wenigstens einer anderen von der Aufnahmeposition (A) entfernten Position (B), in welcher der aufgeweitete Hohlkörper aus der Blasform (32) herausgenommen werden kann, bewegbar ist.

3. Vorrichtung nach Anspruch 1, dadurch gekennzeichnet, daß zwei erste Blasform-Einheiten (110, 111) im Produktionsprozeß wechselweise einen Vorformling (124) aufnehmen und wechselweise zwischen der Aufnahmeposition (A) und einer anderen davon entfernten Position (B) bewegbar sind.

4. Vorrichtung nach Anspruch 3, dadurch gekennzeichnet, daß zwei zweite Blasform-Einheiten (112, 113) in der Warteposition (D, G) vorgesehen sind.

5. Vorrichtung nach Anspruch 3, dadurch gekennzeichnet, daß die beiden Blasform-Einheiten (110, 111), die mit dem Extrusionskopf im Produktionsprozeß zusammenwirken, mit unterschiedlichen Blasformen zum Herstellen von unterschiedlichen Hohlkörpern versehen sind.

6. Vorrichtung nach Anspruch 4, dadurch gekennzeichnet, daß die beiden in der Warteposition befindlichen zweiten Blasform-Einheiten (112, 113) für die Anbringung von unterschiedlichen Blasformen zum Herstellen unterschiedlicher Hohlkörper vorgesehen sind.

7. Vorrichtung nach Anspruch 1, dadurch gekennzeichnet, daß zu beiden Seiten des Arbeitsbereiches der im Produktionsprozeß befindlichen wenigstens einen Blasform-Einheit jeweils eine Warteposition (D, E; F, G)vorgesehen ist.

8. Vorrichtung nach Anspruch 2 und 8, dadurch gekennzeichnet, daß die beiden Wartepositionen (D, E; F, G) zu beiden Seiten der anderen von der Aufnahmeposition (A) entfernten Position (B) der im Produktionsprozeß befindlichen Blasform-Einheit vorgesehen ist.

9. Vorrichtung nach Anspruch 8, dadurch gekennzeichnet, daß die im Produktionsprozeß befindliche wenigstens eine Blasform-Einheit von einem zwischen Aufnahmeposition (A) und anderer Position (B) bewegbaren Wagen (50) getragen ist, der mit Führungen (50a, 50b) für diese Blasform-Einheit versehen ist und die Wartepositionen (D, E; F, G) zur Aufnahme der jeweils nicht am Produktionsprozeß teilnehmenden Blasform-Einheit durch entsprechende stationäre Führungen (54, 56) definiert sind, die bei in der anderen Position (B) befindlichem Wagen (50) mit den auf letzteren befindlichen Führungen (50a, 50b) für die im Produktionsprozeß befindliche Blasform-Einheit fluchten.

10. Vorrichtung nach Anspruch 9, dadurch gekennzeichnet, daß die Führungen (54, 56) in den Wartepositionen (D, E; F, G) und die Führungen (50a, 50b) auf dem Wagen (50) für die im Produktionsprozeß befindliche Blasform-Einheit senkrecht zu den Führungen (54, 56) verlaufen, auf welchen der Wagen (50) zwischen Aufnahmeposition (A) und davon entfernter Position (B) verschiebbar ist.

11. Vorrichtung nach Anspruch 9, dadurch gekennzeichnet, daß die Führungen (50a, 50b) für die Blasform-Einheiten (10, 12) parallel zu den von den Blasformteilen (32a, 32b; 33a, 33b) ausgeführten Öffnungs- und Schließbewegungen verlaufen.

12. Vorrichtung nach Anspruch 3 und 9, dadurch gekennzeichnet, daß die für beide am Produktionsprozeß teilnehmenden Blasform-Einheiten (110, 111) gemeinsamen Führungen (148) für die Bewegungen zwischen Aufnahmeposition (A) und jeweiliger anderer Position (B) sich zu beiden Seiten der Aufnahmeposition (A) erstrecken und an jeder Seite der jeweiligen anderen Position (B) eine Warteposition (D, E; F, G) für die jeweils nicht am Produktionsprozeß teilnehmenden Blasform-Einheiten (112, 113) vorgesehen ist.

13. Vorrichtung nach Anspruch 1, dadurch gekennzeichnet, daß an der jeweils in der Warteposition befindlichen wenigstens einen Blasform-Einheit Reperaturarbeitenn und/oder Arbeit zum Auswechseln der Blasformteile durchgeführt werden.

14. Vorrichtung nach Anspruch 1, dadurch gekennzeichnet, daß der Vorformling in Abhängigkeit von einem bestimmten Programm für seine Wanddicke über seine Länge und/oder seinen Umfang aus dem Extrusionskopf (22) extrudiert wird und das Extrusionssystem (14) mit wenigstens zwei Wanddickenprogrammen versehen ist und bei Wechsel von einer Blasform-Einheit (10 bzw. 12) zur jeweils anderen Blasform-Einheit jeweils das Programm selbsttätig wirksam gestellt wird, welches der Blasform (32, 33) der jeweils mit dem Extrusionskopf (22) im Produktionsprozeß zusammenwirkenden Blasform-Einheit zugeordnet ist.

15. Vorrichtung nach Anspruch 5, dadurch gekennzeichnet, daß der Vorformling in Abhängigkeit von einem bestimmten Programm für seine Wanddicke über seine Länge und/oder seinen Umfang aus dem Extrusionkopf extrudiert wird und das Extrusionssystem mit wenigstens zwei Wanddickenprogrammen versehen ist, die wechselweise wirksam bzw. unwirksam gestellt sind derart, daß der Vorformling jeweils in Abhängigkeit von dem Wanddickenprogramm extrudiert wird, welches der diesen Vorformling aufnehmenden Blasform-Einheit zugeordnet ist.
